# EUROPÄISCHE PATENTSCHRIFT

(11) **EP 2 692 222 B1**
(45) Veröffentlichungstag und Bekanntmachung des Hinweises auf die Patenterteilung: **17.10.2018**
(21) Anmeldenummer: 13167760.1
(22) Anmeldetag: 15.05.2013
(51) Int. Cl.: A01D 34/835, A01D 45/02

(54) **Erntevorrichtung zum Ernten von Mais**
Harvesting device for harvesting maize
Appareil de récolte pour la récolte de maïs

(30) Priorität: 02.08.2012 DE 102012107068
(43) Veröffentlichungstag der Anmeldung: 05.02.2014
(73) Patentinhaber: CLAAS Selbstfahrende Erntemaschinen GmbH, 33428 Harsewinkel (DE)
(72) Erfinder: Grothe, Dominik, 37671 Höxter (DE); Kirchbeck, Alexander, 48149 Münster (DE); Hoffmann, Achim, 33449 Langenberg (DE)

(56) Entgegenhaltungen:
- US-A1- 2011 179 758
- M. Demmel ET AL: "Untersuchung der Wirkung von intensivem Zerkleinern des Maisstrohs beim Mähdrusch auf die Fusariumbelastung der Folgekultur Winterweizen", , 31. Dezember 2007 (2007-12-31), XP055357259, Gefunden im Internet: URL:https://www.lfl.bayern.de/mam/cms07/il t/dateien/ilt1_fusarium_endbericht.pdf [gefunden am 2017-03-21]

## Beschreibung

Die Erfindung betrifft gemäß dem Oberbegriff des Patentanspruchs 1 eine Erntevorrichtung zum Ernten von Mais mit einem an einer selbstfahrenden Erntemaschine angeordneten Erntevorsatz, welches Vorsatzgerät eine Einrichtung zum Erfassen und Führen der Maisstängel sowie eine Einrichtung zur Förderung der mit Abstand zum Boden abgeschnittenen Maispflanzen oder der von den Maispflanzen getrennten Maiskolben in Aufbereitungseinrichtungen aufweist, und mit einer dem Vorsatzgerät zugeordneten Einrichtung zum bodennahen Mulchen von Maisstoppeln oder/oder von abgeernteten Maisstängeln vor einem Überfahren durch Antriebsräder der Erntemaschine.

Maispflanzen, um deren Ernte es mittels einer Erntevorrichtung gemäß der vorliegenden Erfindung geht, bestehen im Wesentlichen aus einem Maisstängel, aus bis zu einem Meter langen Maisblättern sowie aus Fruchtständen, die als von Hüllblättern umschlossene Maiskolben ausgebildet sind. Der Anbau von Mais erfolgt im Allgemeinen als Hackfrucht in Reihenkultur, wobei für die Aussaat Einzelkornsaat verwendet wird. Die ausgewachsenen Maispflanzen können eine Wuchshöhe von bis zu drei Metern erreichen.

Es gibt zwei wesentliche Arten der Maisernte, nämlich zum einen die Ernte als Futtermais oder Biomasse mittels eines zumeist als selbstfahrende Erntemaschine betriebenen Feldhäckslers und zum anderen die Ernte von Körnermais mittels eines Mähdreschers. Sowohl an den selbstfahrenden Feldhäcksler als auch an den selbstfahrenden Mähdrescher wird zur Maisernte ein hierfür erforderlicher Erntevorsatz in Form eines Maisvorsatzes angekuppelt.

Mit dem Feldhäcksler wird die gesamte Maispflanze einschließlich der Maiskörner zerkleinert, um diese anschließend in Form von Silomais als Futtermittel zu verwenden. In dieser zerkleinerten Form kann die Maispflanze auch als Biomasse Biogasanlagen zugeführt werden. Die für die Ernte der Maispflanzen verwendeten Feldhäcksler verarbeiten, wie bereits dargelegt, die gesamte Maispflanze, so dass der Fruchtstand, also der die Maiskörner aufnehmende Maiskolben nicht von den übrigen Pflanzenbestandteilen entfernt werden muss. Der Maisstängel wir zu diesem Zweck mittels eines Schneidwerks in Stoppelhöhe von der Wurzel abgetrennt. An den Feldhäcksler wird ein mit einer Einzugsvorrichtung für die Maispflanze und mit dem Schneidwerk versehenes Vorsatzgerät angekuppelt.

Bei der Ernte von Körnermais mit einem Mähdrescher wird dessen zur Getreideernte dienendes Schneidwerk gegen ein Vorsatzgerät für die Maisernte ausgetauscht. Dieses Vorsatzgerät verfügt über Einzugseinrichtungen, die zum Erfassen und Führen des jeweiligen Maisstängels vorgesehen sind, über eine Pflückeinrichtung, die für einen kontrollierten Einzug der gesamten Maispflanze und eine Entfernung der Maiskolben von den Maisstängeln sorgt, und einen Querförderer, der die von den Maisstängeln getrennten Maiskolben mittig des Vorsatzgerätes in dessen Mulde zusammenzieht und an einen Schrägförderer übergibt. Der Schrägförderer fördert die von der Maispflanze entfernten Maiskolben in ein Dreschwerk des Mähdreschers.

Während des Pflückvorgangs werden die Maisstängel in Richtung des Bodens gezogen und auf diesem abgelegt. Es besteht aber auch die Möglichkeit, die abgeernteten Maisstängel während dieser Bewegung über ggfs. vorhandene Schneid- und Häckselmesser, die auf einer vertikal verlaufenden Messerwellen angeordnet sind, in Stoppelhöhe abzutrennen, zu zerkleinern und auf dem Feld abzulegen. Ferner ist es möglich, auf dieses Schneid- und Häckselmesser zu verzichten und die auf dem Boden abgelegten Maisstängel erst in einem weiteren Arbeitsgang mittels eines vorzugsweise von einem Ackerschlepper angetriebenen Mulchgerätes zu zerkleinern. Es kann aber auch eine als Mulchgerät oder Schlegelmäher ausgebildete Häckseleinrichtung an der Rückwand des Vorsatzgerätes vorgesehen sein. Die Häckseleinrichtung sorgt dann im gleichen Arbeitsgang für eine vollständige Zerkleinerung des aus Blattanteilen der Maispflanzen und der Maisstängel bestehenden Maisstrohs, damit dieses gleichmäßiger über den Boden verteilt ist und bei der anschließenden Bodenbearbeitung vollständig in diesen eingearbeitet werden kann. Das vollständige Einarbeiten des Maisstrohs in den Boden und die gleichmäßig Vermischung mit diesem zur Förderung von dessen Verrottung ist, wie nachfolgend erläutert wird, von erheblicher Bedeutung.

Seit einigen Jahren breitet sich in den Maisanbaugebieten ein Schädling aus, der für erhebliche Ernteausfälle verantwortlich ist. Bei diesem Schädling handelt sich um einen Falter, der unter der Bezeichnung Maiszünsler (Ostrinia nubialis) bekannt ist. Es ist erwiesen, dass der Befall mit diesem Schädling dann erheblich zunimmt, wenn Stängelanteile der Maispflanze, wie z. B. der gesamte Stängel oder die über den Boden vorstehenden Maisstoppeln für lange Zeit auf dem Feld verbleiben. Die Vermehrung des Maiszünslers erfolgt dadurch, dass die Falter an den Unterseiten der mittleren Blattetagen der Maispflanzen im Juni ihre Eier ablegen, aus welchen ca. 2 Wochen später Larven ausschlüpfen.

Die Larven befallen zunächst die Blätter der entsprechenden Maispflanze oder spinnen Fäden, so dass sie, an diesen hängend, vom Wind auf andere Pflanzen übertragen werden können. Die Maden des Maiszünslers dringen in das Innere des Schafts der Maispflanze ein und fressen sich durch diesen hindurch in Richtung von deren Wurzel. Dadurch werden im Stängelinneren Leitungsbahnen zerstört, so dass Umlagerungsprozesse zur Bildung von Stärke erheblich gestört werden. Bei starkem Befall der Pflanze knickt diese ab, was zumeist durch Fäulnis im Stängelmark, deren Hauptursache die Zerstörung des Stängelinneren durch die Larven ist, unterstützt wird. Darüber hinaus befallen die Larven auch die Maiskolben, in denen sie sich in entsprechender Weise einen Weg durch die entsprechende Spindel bahnen oder an den Körnern fressen. Die Folge davon ist, dass sich in den Maiskolben Pilzerkrankungen ausbreiten können, wie z. B. Fusarium-Pilze. Für die Ausbreitung der Schädlinge ist vor allem verantwortlich, dass diese in Teilen des Maisstängels verpuppt überwintern können und dass im darauf folgenden Frühjahr aus der Puppe wieder ein Falter schlüpft.

Von wesentlicher Bedeutung ist es daher, das Überwintern der Maiszünslerlarven und somit die Vermehrung dieses Schädlings zu verhindern. Das setzt voraus, dass die Pflanzenreste sehr fein zerhäckselt und dann vollständig und mit möglichst großer Arbeitstiefe bei der nachfolgenden Bodenbearbeitung in den Boden eingebracht werden. Zuvor ist dafür zu sorgen, dass die Pflanzenreste und Stoppel intensiv zerkleinert und aufgefasert werden, damit diese im Boden vollständig verrotten können. Anderenfalls besteht das Risiko, dass zum einen die Larven des Maiszünslers dieses ackerbauliche Verfahren überleben und evtl. in den Folgejahren durch eine Bodenbearbeitung wieder an die Oberfläche gelangen, und zum anderen, dass sich Pilzinfektionen in den Stoppeln ausbreiten, die in der Fruchtfolge die nachfolgenden Pflanzen befallen.

Wie bereits dargelegt, sollen das Maisstroh und die Maisstoppeln im Rahmen eines Mulchvorganges zerkleinert werden, wobei dieser Mulchvorgang in einem Arbeitsvorgang durchgeführt werden kann, der sich an den Erntevorgang anschließt. Der Nachteil davon ist, dass das Maisstroh und die Maisstoppeln von den Antriebsrädern und den lenkbaren Rädern der Erntemaschine überfahren wird und folglich beim anschließenden Mulchen nicht mehr erfasst werden kann. Das ist auch ein Grund dafür, dass entsprechende Mulchgeräte mit dem Erntevorsatz kombiniert oder diesem unmittelbar nachgeordnet werden. Das führt dazu, dass die Maisstoppeln oder das verbleibende Maisstroh vor dem Mulchen nicht von den Rädern überfahren werden.

Eine Erntevorrichtung der im Oberbegriff des Patentanspruchs 1 angegebenen Gattung ist aus der DE 10 2004 020 447 A1 bekannt. Es handelt sich bei dieser Erntevorrichtung um einen selbstfahrenden Feldhäcksler mit einem Vorsatzgerät, welches Einrichtungen zum Einzug, zur Förderung und zum Abschneiden von Maispflanzen aufweist. Die auf dem Feld verbleibenden Maisstoppeln, die wie bereits dargelegt, einen optimalen Platz zum Überwintern der Maiszünslerlarven bieten, sollen dadurch wirkungsvoll bekämpft werden, dass die noch vom Erdboden aufragenden Maisstoppeln von einer sich über die gesamte Breite des Erntevorsatzes erstreckende Zerschneid- und/oder Zerkleinerungseinrichtung bodennah erfasst und zerkleinert werden. Dieses Abschneiden und Zerkleinern der Maisstoppel soll bereits erfolgen, bevor die Antriebsräder der Erntemaschine die Stoppeln überfahren.

Aus einer von der Bayerischen Landesanstalt für Landwirtschaft Institut für Landtechnik und Tierhaltung unter dem Titel "Untersuchung der Wirkung von intensivem Zerkleinern des Maisstrohs beim Mähdrusch auf die Fusariumbelastung der Folgekultur Winterweizen" im Internet unter (https://www.lfl.bavern.de/mam/cms07/ilt/dateien/ilt1 fusarium endbericht.pdf) publizierten Bericht vom 31. Dezember 2007, XP055357259, ist eine Erntevorrichtung gemäß dem Oberbegriff des Anspruches 1 bekannt.

Es ist Aufgabe der vorliegenden Erfindung, eine derartige dem Vorsatzgerät zugeordnete Einrichtung zum bodennahen Mulchen von Maisstoppeln oder von abgeernteten Maisstängeln derart weiterzubilden, dass sie optimal an der Erntemaschine angeordnet werden kann.

Diese Aufgabe wird durch die Merkmale des Patentanspruchs 1 gelöst. Gemäß dem Anspruch 1 ist Erntevorrichtung zum Ernten von Mais vorgesehen, umfassend eine selbstfahrende Erntemaschine mit einem an der selbstfahrenden Erntemaschine angeordneten Erntevorsatz, welches Vorsatzgerät eine Einrichtung zum Erfassen und Führen der Maisstängel sowie eine Einrichtung zur Förderung der mit Abstand zum Boden abgeschnittenen Maispflanzen oder der von den Maispflanzen getrennten Maiskolben in Aufbereitungseinrichtungen aufweist, und mit einer dem Vorsatzgerät zugeordneten Einrichtung zum bodennahen Mulchen von Maisstoppeln und/oder von abgeernteten Maisstängeln vor einem Überfahren durch Antriebsräder der Erntemaschine, wobei in Fahrtrichtung der Erntemaschine vor deren Antriebsrädern mit Abstand zueinander angeordnete erste und zweite Mulchgeräte vorgesehen sind, deren jeweilige Arbeitsbreite im Wesentlichen der Breite des jeweils nachfolgenden Antriebsrades entspricht, wobei dass im Heckbereich der Erntemaschine ein drittes Milchgerät angeordnet ist, das zur nachfolgenden Bearbeitung eines von dem ersten und dem zweiten Mulchgerät unbearbeiteten Bereichs der Bodenoberfläche dienen, der durch die Arbeitsbreite des Vorsatzgerätes begrenzt ist, dadurch gekennzeichnet, dass im Heckbereich vierte und Mulchgeräte angeordnet sind, die zur nachfolgenden Bearbeitung eines von dem ersten und dem zweiten Mulchgerät unbearbeiteten Bereichs der Bodenoberfläche dienen, der durch die Arbeitsbreite des Vorsatzgerätes begrenzt ist, wobei das vierte und das fünfte Mulchgerät jeweils zur Bearbeitung eines außerhalb einer Spurweite der Antriebsräder liegenden, sich jeweils bis zur maximalen Erstreckung des Vorsatzgerätes liegenden Streifens der Bodenoberfläche dient. Die beiden den Antriebsrädern zugeordneten Mulchgeräte weisen somit nur eine geringe Arbeitsbreite auf und führen nur zu einer unwesentlichen Gewichtserhöhung des Vorsatzgerätes, an welchem sie befestigt sind. Daher kann eine zu hohe Frontlast der Erntemaschine, die sich bei angehobenem Vorsatzgerät negativ auf die Lenkbarkeit der Erntemaschine auswirken würde, vermieden werden. Im Übrigen weist die geringe Gewichtserhöhung des Erntevorsatzes und dessen geringe bauliche Veränderungen den Vorteil auf, dass der mit den beiden Mulchgeräten kombinierte Erntevorsatz nach wie vor problemlos in seinem an die Erntemaschine angekuppelten Zustand transportiert werden kann. Ein mit der Breitenabmessung des Erntevorsatzes ausgeführtes Mulchgerät würde nämlich die baulichen Abmessungen und das Gewicht des Erntevorsatzes erheblich erhöhen.

Demgegenüber soll sich die unterhalb des Erntevorsatzes angeordnete Zerschneid- und/oder Zerkleinerungseinrichtung nach der DE 10 2004 020 447 A1 über die gesamte Arbeitsbreite des Vorsatzgerätes erstrecken. Diese als Mäh-, Mulch-, Häcksel- oder Schlegeleinrichtung ausgebildete Zerschneid- und/oder Zerkleinerungseinrichtung führt bei Anordnung am Vorsatzgerät und Anbringung des Vorsatzgerätes an der Erntemaschine zu einer erheblichen Gewichtserhöhung der Erntemaschine in ihrem Frontbereich und kann zu einem Kippmoment um die vordere Antriebsachse führen, sofern in deren Heckbereich keine entsprechende Ballastierung erfolgt. Außerdem ist das in entsprechender Weise mit der Zerschneid- und/oder Zerkleinerungseinrichtung versehene Vorsatzgerät aufgrund der Veränderung seiner baulichen Abmessungen und der zuvor bereits erläuterten Gewichtszunahme nicht mehr dazu geeignet, mittels einer Transporteinrichtung hinter der Erntemaschine transportiert zu werden.

In weiterer Ausgestaltung der Erfindung sollen die beiden Mulchgeräte dem Erntevorsatz nachgeordnet sein. Die beiden einzelnen Mulchgeräte werden folglich in einem Freiraum, der zwischen einer Rückwand des Vorsatzgerätes und den Antriebsrädern vorhanden ist, angebracht. Dabei können die beiden Mulchgeräte gemeinsam mit dem Vorsatzgerät heb- und senkbar sein, aber einen Freigang gegenüber dem Vorsatzgerät aufweisen, so dass sie sich bis auf den Boden absenken und der Bodenkontur folgen können.

Wie weiter oben ausgeführt, sind im Heckbereich der Erntemaschine dritte, vierte und fünfte Mulchgeräte angeordnet, die zur nachfolgenden Bearbeitung eines von dem ersten und dem zweiten Mulchgerät unbearbeiteten Bereichs der Bodenoberfläche dienen, der durch die Arbeitsbreite des Vorsatzgerätes begrenzt ist. Diese Mulchgeräte sind ebenfalls als Einzelgeräte ausgebildet, so dass sie sich, genauso wie die beiden dem Vorsatzgerät
zugeordneten Mulchgeräte optimal an die Bodenkontur anpassen können. Sie lassen sich außerdem für eine Straßenfahrt der Erntemaschine in eine vertikale Position oder in Längsrichtung einschwenken. Die Aufteilung in einzelne Mulchgeräte führt zu einer deutlichen Verbesserung beim bodennahen Mulchen, so dass mit Sicherheit keine restlichen Maisstoppeln auf dem Feld verbleiben.

Gemäß einer vorteilhaften Weiterbildung ist zumindest eines der Mulchgeräte in dessen Lage gegenüber dem Boden verstellbar. Die Verstellbarkeit kann zur Anpassung des Abstands zum Boden und/oder der Ausrichtung gegenüber dem Boden dienen. So lassen sich unterschiedliche Bearbeitungshöhen erzielen. Eine Anpassung an die Bodenkontur ist möglich. Vorteilhaft sind sämtliche der vorgesehenen Mulchgeräte lageverstellbar.

Im Zusammenhang heckseitig der Erntemaschine angeordneter Mulchgeräte ist vorgesehen, dass sich das dritte Mulchgerät im Wesentlichen über eine Spurweite der Antriebsräder der Erntemaschine erstreckt. Dieses dritte Mulchgerät erfasst also die Maisstoppeln oder eventuelle Reste von Maisstroh in einem zwischen den Antriebsrädern der Erntemaschine liegenden Bereich. Das vierte und das fünfte Mulchgerät sollen jeweils zur Bearbeitung eines außerhalb einer Spurweite der Antriebsräder liegenden sich jeweils bis zur maximalen Erstreckung des Vorsatzgerätes liegenden Streifens der Bodenoberfläche dienen. Die einzelnen Mulchgeräte ergänzen sich also in der Weise, dass nach einem Erntevorgang der gesamte abgeerntete Streifen, der durch die Arbeitsbreite des Vorsatzgerätes begrenzt ist, gemulcht wird.

In weiterer Ausgestaltung der Erfindung soll die Erntevorrichtung ein mit einem Mulchmähwerk versehenes Folgefahrzeug aufweisen, wobei sich eine Spurweite und eine Reifenbreite des Folgefahrzeugs im Wesentlichen mit denen der Erntemaschine decken und eine Arbeitsbreite des Mulchmähwerks mit der des Vorsatzgerätes übereinstimmt. In diesem Fall erfolgt also das Mulchen der restlichen Streifen, die zwischen den Antriebsrädern und außerhalb der Antriebsräder der Erntemaschine liegen, mittels eines Folgefahrzeugs, wobei das Folgefahrzeug mit seinen Rädern die bereits durch das erste und das zweite Mulchgerät bearbeiteten Streifen befährt. Dadurch wird vermieden, dass dieses Folgefahrzeug Maisstoppel oder Maistroh überfährt und in den Boden einwalzt. Weiterhin kann das Folgefahrzeug mittels eines selbsttätigen Lenksystems in den durch die ersten und zweiten Mulchgeräte bearbeiteten Streifen verfahren werden.

Bei der Erntemaschine kann es sich um einen selbstfahrenden Mähdrescher oder um einen selbstfahrenden Feldhäcksler handeln, die in entsprechender Weise mit einem Maisvorsatz, mit ersten und zweiten am Maisvorsatz angebrachten Mulchgeräten sowie mit dritten, vierten und fünften Mulchgeräten in ihrem Heckbereich versehen sind. Das dritte Mulchgerät kann im Heckbereich der Erntemaschine mittels eines Krafthebers in eine Transportstellung hebbar sein, während sich die vierten und fünften Mulchgeräte, wie bereits dargelegt, vorzugsweise in eine vertikale Stellung bewegen lassen, so dass die Erntemaschine eine öffentliche Straße oder Einfahrten zu den Feldern befahren kann.

Schließlich ist für eine Ernteeinrichtung mit einem Feldhäcksler vorgesehen, dass ein parallel zu diesem Feldhäcksler bewegtes Sammelfahrzeug mittels einer selbsttätigen Lenkeinrichtung in von dem ersten und dem zweiten Mulchgerät während eines vorherigen Erntevorgangs erzeugten Streifen geführt wird. Dadurch kann wiederum vermieden werden, dass dieses Sammelfahrzeug außerhalb der durch die beiden Mulchgeräte erzeugten Gasse fährt und dabei mit seinen Rädern die Maisstoppeln platt walzt. Es ist in diesem Zusammenhang natürlich unerlässlich, dass zuvor mittels der in erfindungsgemäßer Weise über die gesamte Arbeitsbreite der Erntemaschine die Stoppeln mulchenden Einrichtung das Vorgewende von Stoppeln und/oder Maisstroh befreit wird. Alternativ dazu bietet sich auch die Möglichkeit, dass im Anschluss an einen Erntevorgang am Vorgewende mit einem Folgefahrzeug die Stoppeln gemulcht werden, so dass sie nicht mehr von der am Ende des Bestands wendenden Erntemaschine überfahren werden können.

Die Erfindung ist nicht auf die Merkmale des Patentanspruchs 1 und der auf ihn rückbezogenen abhängigen Ansprüche beschränkt. Soweit Merkmale im Rahmen der Patentanmeldung offenbart sind, sei es im Rahmen der nachfolgenden Beschreibung oder der Zeichnungen, können diese mit einzelnen Merkmalen der Patentansprüche kombiniert werden. Weiterhin soll die Bezugnahme der Patentansprüche auf die Zeichnung durch die Verwendung von Bezugszeichen die Erfindung nicht auf diese konkreten Darstellungen beschränken.

Zur weiteren Erläuterung der Erfindung wird auf die Zeichnung verwiesen. Es zeigen:

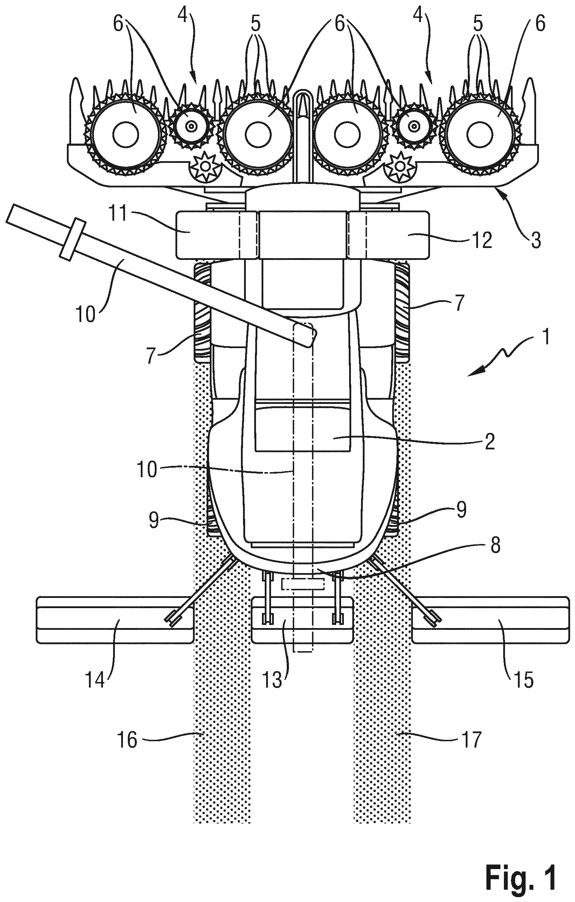

- Fig. 1: eine schematische Ansicht eines Ausführungsbeispiels der Erfindung als Draufsicht auf einen selbstfahrenden Feldhäcksler, bei welchem über erste und zweite Mulchgeräte ausschließlich ein von nachfolgenden Antriebsrädern befahrener Bereich sowie verbleibende Maisstoppeln und/oder Maisstroh über dritte, vierte und fünfte Mulchgeräte innerhalb der Arbeitsbreite des Vorsatzgerätes bearbeitet werden,

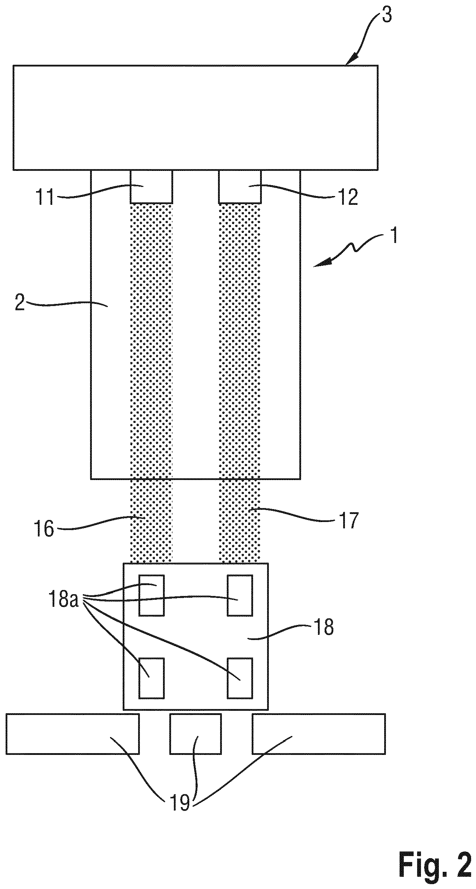

- Fig. 2: als schematische Darstellung eine beispielhafte Erntevorrichtung, die zum Verständnis der Erfindung nützlich ist, die aus einer Erntemaschine und einem dieser folgenden Folgefahrzeug besteht, wobei dieses Folgefahrzeug innerhalb der von den ersten und zweiten Mulchgeräten erzeugten Spuren fährt und

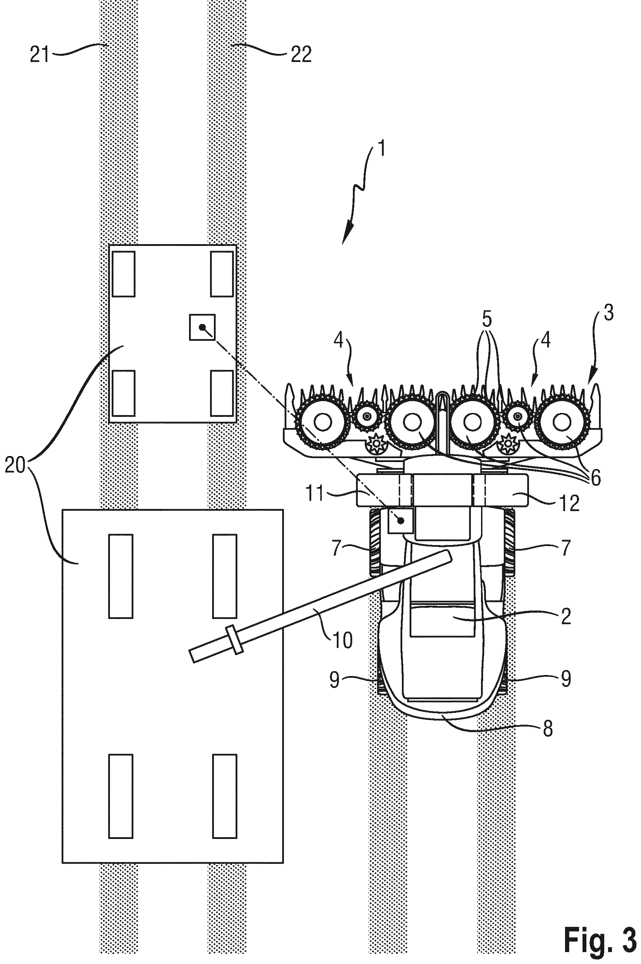

- Fig. 3: eine schematische Darstellung einer beispielhaften Erntevorrichtung, die zum Verständnis der Erfindung nützlich ist, bei der ein Sammelfahrzeug parallel zu einem selbstfahrenden Feldhäcksler innerhalb einer zuvor erzeugten Fahrspur bewegt wird.

In den Figuren 1 bis 3 ist mit 1 eine Erntevorrichtung bezeichnet, die im Wesentlichen aus einer als selbstfahrender Feldhäcksler ausgebildeten Erntemaschine 2 und einem frontseitig an dieser angebauten Erntevorsatz 3 besteht. Dieser Erntevorsatz 3 weist eine Einrichtung 4 zum Erfassen und Führen von Maisstängeln auf, die Maisstängel zusammen mit den Maiskolben nicht näher dargestellten Arbeitsorganen des Feldhäckslers zuführt, die das Erntegut aufbereiten und häckseln. Die Einrichtungen 4 zum Erfassen und Führen der Maisstängel weisen zu diesem Zweck mit Förderzinken 5 versehene Förderscheiben 6 auf, die die kompletten Maispflanzen nach deren Erfassen in eine Führungsbahn bewegen. Die Maispflanze wird dabei nach dem Erfassen durch die Förderzinken 5 mittels einer ebenfalls nicht dargestellten Schneideinrichtung oberhalb des Bodens abgetrennt, so dass nur noch Maisstoppeln auf dem Feld verbleiben.

Die Erntemaschine 2 weist vordere Antriebsräder 7 und in ihrem Heckbereich 8 lenkbare Räder 9 auf. Die lenkbaren Räder 9 verlaufen dabei bei Geradeausfahrt der Erntemaschine 2 innerhalb der durch die vorderen Antriebsräder 7 erzeugten Spur. Außerdem ist die Erntemaschine 2 mit einem schwenkbaren Auswurfkrümmer 10 versehen, über welchen das gehäckselte Erntegut gefördert wird. Dieser Auswurfkrümmer 10 lässt sich in unterschiedliche Positionen für eine Förderung des Häckselguts in ein Sammelfahrzeug sowie in eine Position für eine Straßenfahrt der Erntemaschine 2 schwenken.

Wie weiterhin der Figur 1 entnommen werden kann, sind in einem Bereich zwischen dem Erntevorsatz 3 und der Erntemaschine 2 Mulchgeräte 11 und 12 angeordnet, die jeweils eine Arbeitsbreite aufweisen, die zumindest der Breite des jeweils nachfolgenden Antriebrades 7 entspricht. Dabei ist das erste Mulchgerät 11 dem in Fahrtrichtung gesehen linken Antriebsrad 7 und das zweite Mulchgerät 12 dem in Fahrtrichtung gesehen rechten Antriebsrad 7 vorgeordnet.

Unter Mulchgerät wird dabei eine Einrichtung verstanden, die dazu geeignet ist, die Maisstoppel oder sonstigen Pflanzenreste unmittelbar am Boden abzuschneiden, in möglichst kleine Teile zu zerkleinern und zu zerfasern. Die beiden ersten und zweiten Mulchgeräte 11 und 12 sind folglich derart angeordnet, dass das Schneiden und Zerkleinern von Resten des Maisstrohs und der Maisstoppeln bereits erfolgt, bevor die Erntemaschine 2 diese nach dem Erntevorgang noch auf dem Feld vorhandenen Reste überfährt. Daher können die Antriebsräder 7 und die diesen in der gleichen Spur nachfolgenden lenkbaren Räder 9 die Pflanzenreste und die Maisstoppeln nicht plattwalzen bzw. in die Oberfläche des Bodens eindrücken.

Wenn die Erntemaschine 2 als selbstfahrender Mähdrescher ausgebildet ist und zur Ernte von Körnermais dient, sollen die ersten und zweiten Mulchgeräte 11 und 12 ebenfalls vor den vorderen Antriebsrädern 7 der Erntemaschine 2 angeordnet sein. In diesem Fall kann der Erntevorsatz 3 mit einer Schneideinrichtung versehen sein, die den Maisstängel der Maispflanze nach dem Abernten der Maiskolben mittels einer im Erntevorsatz angeordneten Pflückeinrichtung abschneidet und evtl. zerkleinert. In diesem Fall sollen die beiden Mulchgeräte 11 und 12 eine Nachzerkleinerung der Maisstängel und ebenfalls ein Abschneiden und Zerkleinern der Maisstoppeln vornehmen.

Allerdings sind auch Erntevorsätze zum Ernten von Mais bekannt, bei denen ein Schneidwerk nicht vorgesehen ist und demzufolge die gesamte Maisstängel, ohne zuvor im Bereich des Bodens abgetrennt zu werden, auf diesem abgelegt werden. Dann sollen die beiden Mulchgeräte 11 und 12 die gesamte Maispflanze unmittelbar am Boden abtrennen und in sehr feine Bestandteile zerkleinern.

Wie weiterhin der Figur 1 entnommen werden kann, sind an der Erntemaschine 2 in deren Heckbereich 8 weitere Mulchgeräte 13, 14 und 15 angeordnet. Das mit 13 bezeichnete dritte Mulchgerät deckt dabei einen vom Erntevorsatz 3 abgeernteten Streifen ab, der zwischen Spuren 16 und 17 liegt, die von den Antriebsrädern 7 erzeugt werden und die zuvor von den Mulchgeräten 11 und 12 bearbeitet wurden. Weitere innerhalb des Erntebereichs des Erntevorsatzes 3 liegende Streifen, die sich von den Spuren 16 und 17 bis zu der jeweiligen maximalen Erstreckung des Erntevorsatzes 3 erstrecken, werden von dem vierten Mulchgerät 14 und dem fünften Mulchgerät 15 bearbeitet. Daher ergibt sich insgesamt ein gemulchter Streifen, der mit dem mit der Erntevorrichtung 1 abgeernteten Streifen des Erntegutes übereinstimmt. Daher können mit einer derartigen Anordnung auch zu Beginn des Erntevorganges am Vorgewende mehrere Streifen abgeerntet werden, so dass in diesem Bereich ebenfalls die Reste der Maisstängel bzw. die Maisstoppeln zerkleinert werden, bevor sie beim Wenden der Erntemaschine 2 überfahren werden.

In der Figur 2 ist die aus dem Erntevorsatz 3, der Erntemaschine 2 und den beiden Mulchgeräten 11 und 12 bestehende Erntevorrichtung 1 schematisch dargestellt. In den erzeugten Spuren 16 und 17, die von den beiden Mulchgeräten 11 und 12 zuvor bearbeitet wurden, soll der Erntevorrichtung 1 allerdings ein Folgefahrzeug 18 folgen, dessen Spurweite exakt der Spurweite der Erntemaschine 2 entspricht, so dass Räder 18a in den Spuren 16 und 17 laufen. Bei diesem Folgefahrzeug 18 kann es sich um einen Ackerschlepper oder um ein landwirtschaftliches Systemfahrzeug handeln, das vorzugsweise in seinem Heckbereich über einen Kraftheber ein weiteres Mulchgerät 19 aufnimmt. Dieses Mulchgerät 19 kann eine Arbeitsbreite aufweisen, die der Breite des gesamten Erntevorsatzes 3 entspricht. Es besteht aber auch die Möglichkeit, wie in der Figur 2 dargestellt, am Folgefahrzeug 18 einzelne Mulchgeräte 19 vorzusehen, die entsprechend den Mulchgeräten 13, 14 und 15 der Figur 1 ausgebildet sind und somit die verbleibenden Streifen bearbeiten.

Schließlich ist in der Figur 3 eine Ausbildung einer Erntevorrichtung 1 dargestellt, bei der neben der mit dem Erntevorsatz 3 versehenen Erntemaschine 2 ein Sammelfahrzeug 20 betrieben wird, das aus einem Ackerschlepper sowie aus einem von diesem gezogenen fahrbaren Sammelbehälter besteht und zum Aufnehmen des von dem Auswurfkrümmer 10 geförderten gehäckselten Erntegutes dient. Wie aus der Figur 3 hervorgeht, wird dieses Sammelfahrzeug 20 in Spuren 21 und 22 verfahren, die bei einem vorherigen Erntevorgang am Bestand erzeugt worden sind und dabei von den entsprechenden Mulchgeräten 11 und 12 der Erntemaschine 2 bearbeitet wurden. Das Sammelfahrzeug 20 weist eine nicht näher darstellte selbsttätige Lenkeinrichtung auf, die per Funksignale oder GPS-Signale beherrscht wird. Auf diese Weise wird sichergestellt, dass sich auch das Sammelfahrzeug 20 in einer bereits gemulchten Spur bewegt und somit weder die Maisstoppeln noch die verbleibenden Reste der Maispflanzen in den Boden walzt.

Zu den entsprechenden Mulchgeräten 11, 12, 13, 14, 15 und 19 sei noch bemerkt, dass diese vorzugsweise mit als mit Schlegel ausgebildeten Messern versehen sind und daher die Pflanzenreste inklusive der Maisstoppeln in winzige Bestandteile zerkleinern. Das auf dem Feld abgelegte zerkleinerte Material kann somit bei der anschließenden Bodenbearbeitung gleichmäßig und sehr tief in den Boden eingebracht werden, so dass evtl. noch vorhandene Larven des Maiszünslers keine Möglichkeiten haben, sich zum Falter zu entwickeln. Wenn diese Zerkleinerung und die anschließende Einarbeitung der Pflanzenreste in den Boden nicht ausreichend sind, so können die Pflanzenreste und Stoppeln evtl. noch zusätzlich über den Mulchgeräten nachgeschaltete Konditionierer, die mit Walzen versehen sind, derart bearbeitet werden, dass die Larven mit Sicherheit vernichtet werden. Die Stoppeln und die Pflanzenreste werden zwischen den Walzen einem mechanischen Druck ausgesetzt.

Die Figuren 1 bis 3 verdeutlichen, dass mit der erfindungsgemäßen Erntevorrichtung 1 unter Verwendung der den Fahrspuren zugeordneten Mulchgeräten 11 und 12 mit Sicherheit verhindert werden kann, dass relativ lange Maisstängel oder Maisstoppeln zunächst plattgewalzt und anschließend nur schlecht verteilt und mit geringer Arbeitstiefe in den Boden eingebracht werden.

### Bezugszeichenliste

- 1: Erntevorrichtung
- 2: Erntemaschine
- 3: Erntevorsatz
- 4: Einrichtung zum Erfassen und Führen von Maisstängeln
- 5: Förderzinken
- 6: Förderscheiben
- 7: vordere Antriebsräder
- 8: Heckbereich von 2
- 9: lenkbare Räder
- 10: Auswurfkrümmer
- 11: erstes Mulchgerät
- 12: zweites Mulchgerät
- 13: drittes Mulchgerät
- 14: viertes Mulchgerät
- 15: fünftes Mulchgerät
- 16: Spur
- 17: Spur
- 18: Folgefahrzeug
- 18a: Räder von 18
- 19: Mulchgerät von 18
- 20: Sammelfahrzeug
- 21: vorherige Spur
- 22: vorherige Spur

## Patentansprüche

1. Erntevorrichtung (1) zum Ernten von Mais, umfassend eine selbstfahrende Erntemaschine (2) mit einem an der selbstfahrenden Erntemaschine (2) angeordneten Erntevorsatz (3), welches Vorsatzgerät (3) eine Einrichtung (4) zum Erfassen und Führen der Maisstängel sowie eine Einrichtung zur Förderung der mit Abstand zum Boden abgeschnittenen Maispflanzen oder der von den Maispflanzen getrennten Maiskolben in Aufbereitungseinrichtungen aufweist, und mit einer dem Vorsatzgerät (3) zugeordneten Einrichtung zum bodennahen Mulchen von Maisstoppeln und/oder von abgeernteten Maisstängeln vor einem Überfahren durch Antriebsräder (7) der Erntemaschine (2),
wobei in Fahrtrichtung der Erntemaschine (2) vor deren Antriebsrädern (7) mit Abstand zueinander angeordnete erste und zweite Mulchgeräte (11 und 12) vorgesehen sind, deren jeweilige Arbeitsbreite im Wesentlichen der Breite des jeweils nachfolgenden Antriebsrades (7) entspricht,
wobei im Heckbereich (8) der Erntemaschine (2) ein drittes Mulchgerät (13) angeordnet ist, **dadurch gekennzeichnet, dass** im Heckbereich vierte und fünfte Mulchgeräte (14 und 15) angeordnet sind, wobei die dritten, vierten und fünften Mulchgeräte (13, 14, 15) zur nachfolgenden Bearbeitung eines von dem ersten und dem zweiten Mulchgerät (11 und 12) unbearbeiteten Bereichs der Bodenoberfläche dienen, der durch die Arbeitsbreite des Vorsatzgerätes (3) begrenzt ist, wobei das vierte und das fünfte Mulchgerät (14 und 15) jeweils zur Bearbeitung eines außerhalb einer Spurweite der Antriebsräder (7) liegenden, sich jeweils bis zur maximalen Erstreckung des Vorsatzgerätes (3) liegenden Streifens der Bodenoberfläche dient.

2. Erntevorrichtung (1) nach Patentanspruch 1, **dadurch gekennzeichnet, dass** die ersten und zweiten Mulchgeräte (11 und 12) dem Vorsatzgerät (3) nachgeordnet sind.

3. Erntevorrichtung (1) nach einem der Patentansprüche 1 oder 2, **dadurch gekennzeichnet, dass** zumindest eines der Mulchgeräte (11, 12, 13, 14, 15) in dessen Lage gegenüber dem Boden verstellbar ist.

4. Erntevorrichtung (1) nach Patentanspruch 1 bis 3, **dadurch gekennzeichnet, dass** sich das dritte Mulchgerät (13) im Wesentlichen über eine Spurweite der Antriebsräder (7) der Erntemaschine (2) erstreckt.

5. Erntevorrichtung (1) nach Patentanspruch 1, **gekennzeichnet durch** ein mit einem Mulchmähwerk (19) versehenes Folgefahrzeug (18), wobei sich eine Spurweite und eine Reifenbreite des Folgefahrzeugs (18) im Wesentlichen mit denen der Erntemaschine (2) decken, und dass eine Arbeitsbreite des vom Folgefahrzeug (18) betriebenen Mulchmähwerks (19) mit der des Vorsatzgerätes (3) übereinstimmt.

6. Erntevorrichtung (1) nach Patentanspruch 5, **dadurch gekennzeichnet, dass** das Folgefahrzeug (18) eingerichtet ist mittels eines selbsttätigen Lenksystems in den durch die ersten und zweiten Mulchgeräte (11 und 12) bearbeiteten Streifen (16 und 17) verfahren zu werden.

7. Erntevorrichtung (1) nach einem der Patentansprüche 1 bis 6, **dadurch gekennzeichnet, dass** die Erntemaschine als selbstfahrender Mähdrescher ausgebildet ist.

8. Erntevorrichtung (1) nach einem der Patentansprüche 1 bis 6, **dadurch gekennzeichnet, dass** die Erntemaschine (2) als selbstfahrender Feldhäcksler ausgebildet ist.

9. Erntevorrichtung (1) nach Patentanspruch 8, **dadurch gekennzeichnet, dass** die Erntevorrichtung (1) ein parallel zum selbstfahrenden Feldhäcksler (2) bewegbares Sammelfahrzeug (20) aufweist, das eingerichtet ist mittels einer selbsttätigen Lenkeinrichtung in von dem ersten und dem zweiten Mulchgerät (11 und 12) während eines vorherigen Erntevorganges erzeugten Streifens (21 und 22) geführt zu werden.

## Claims

1. A harvesting apparatus (1) for harvesting corn including a self-propelled harvester (2) with a header (3) which is arranged on the self-propelled harvester and which has a device (4) for detecting and guiding corn stalks and a device for conveying the corn plants which are cut off at a spacing relative to the ground or the corncobs which are separated from the corn plants into processing devices, and a device associated with the header for mulching near the ground corn stubble and/or harvested corn stalks before being run over by drive wheels (7) of the harvester (2), wherein there are provided first and second mulching devices (11 and 12) which are arranged in front of the drive wheels (7) of the harvester (2) in the direction of travel of the harvester (2) and at a spacing relative to each other and the respective working width of which substantially corresponds to the width of the respective following drive wheel (7) wherein a third mulching device (13) is arranged in the rear region (8) of the harvester (2), **characterised in that** fourth and fifth mulching devices (14, and 15) are arranged in the rear region, wherein the third, fourth and fifth mulching devices (13, 14, 15) serve for subsequent processing of a region of the ground surface which is not processed by the first and second mulching devices (11 and 12) and which is defined by the working width of the header (3), wherein the fourth and fifth mulching devices (14 and 15) respectively serve for processing a strip of the ground surface, that is outside a track width of the drive wheels (7) and which respectively extends to the maximum extent of the header (3).

2. A harvesting apparatus (1) according to claim 1 **characterised in that** the first and second mulching devices (11 and 12) are disposed downstream of the header.

3. A harvesting apparatus (1) according to one of claims 1 and 2 **characterised in that** at least one of the mulching devices (11, 12, 13, 14, 15) is adjustable in its position relative to the ground.

4. A harvesting apparatus (1) according to claims 1 to 3 **characterised in that** the third mulching device (13) extends substantially over a track width of the drive wheels (7).

5. A harvesting apparatus (1) according to claim 1 **characterised by** a following vehicle (18) provided with a mulching mowing mechanism (19), wherein a track width and a tyre width of the following vehicle (18) substantially coincide with those of the harvester (2) and that a working width of the mulching mowing mechanism (19) operated by the following vehicle (18) is identical to that of the header (3).

6. A harvesting apparatus (1) according to claim 5 **characterised in that** the following vehicle (18) is adapted to be displaced by means of an automatic steering system in the strips (16 and 17) processed by the first and second mulching devices (11 and 12).

7. A harvesting apparatus (1) according to claims 1 to 6 **characterised in that** the harvester is in the form of a self-propelled combine harvester.

8. A harvesting apparatus (1) according to claims 1 to 6 **characterised in that** the harvester (2) is in the form of a self-propelled forage harvester.

9. A harvesting apparatus (1) according to claim 8 **characterised in that** the harvest apparatus (1) has a collecting vehicle (20) which is moveable parallel to the self-propelled forage harvester (2) and which is adapted to be guided by means of an automatic steering device in strips (21 and 22) produced by the first and second mulching devices (11 and 12) during a previous harvesting operation.

## Revendications

1. Dispositif de récolte (1) pour récolter du maïs, comprenant une machine de récolte automotrice (2) avec un outil frontal de récolte (3) disposé sur la machine de récolte automotrice (2), lequel outil frontal (3) comporte un équipement (4) pour saisir et guider les tiges de maïs ainsi qu'un équipement pour amener à des équipements de traitement les pieds de maïs coupés à distance du sol ou les épis de maïs séparés des pieds de maïs, et avec un équipement associé à l'outil frontal (3) pour broyer près du sol un chaume de maïs et/ou des tiges de maïs récoltées avant que les roues motrices (7) de la machine de récolte (2) ne passent dessus, des premier et deuxième broyeurs (11 et 12) étant prévus, qui sont disposés à distance l'un de l'autre devant les roues motrices (7) de la machine de récolte (2) par rapport au sens de la marche de celle-ci et dont la largeur de travail respective correspond sensiblement à la largeur de la roue motrice (7) disposée respectivement en aval, dans la zone arrière (8) de la machine de récolte (2) étant disposé un troisième broyeur (13), **caractérisé en ce que** dans la zone arrière sont disposés des quatrième et cinquième broyeurs (14 et 15), les troisième, quatrième et cinquième broyeurs (13, 14, 15) servant à travailler en aval une zone de la surface de sol qui n'est pas travaillée par le premier et le deuxième broyeur (11 et 12) et qui est limitée par la largeur de travail de l'outil frontal (3), le quatrième et le cinquième broyeur (14 et 15) servant respectivement à travailler une bande de surface de sol s'étendant à l'extérieur d'une largeur de voie des roues motrices (7) et s'étendant respectivement jusqu'à l'extension maximale de l'outil frontal (3).

2. Dispositif de récolte (1) selon la revendication 1, **caractérisé en ce que** les premier et deuxième broyeurs (11 et 12) sont disposés en aval de l'outil frontal (3).

3. Dispositif de récolte (1) selon une des revendications 1 ou 2, **caractérisé en ce qu'**au moins un des broyeurs (11, 12, 13, 14, 15) est réglable sur le plan de sa position par rapport au sol.

4. Dispositif de récolte (1) selon la revendication 1 à 3, **caractérisé en ce que** le troisième broyeur (13) s'étend sensiblement sur une largeur de voie des roues motrices (7) de la machine de récolte (2).

5. Dispositif de récolte (1) selon la revendication 1, **caractérisé par** un véhicule suiveur (18) muni d'un mécanisme broyeur (19), une largeur de voie et une largeur de pneumatiques du véhicule suiveur (18) coïncidant sensiblement avec celles de la machine de récolte (2), et en ce qu'une largeur de travail du mécanisme broyeur (19) actionné par le véhicule suiveur (18) correspond à celle de l'outil frontal (3) .

6. Dispositif de récolte (1) selon la revendication 5, **caractérisé en ce que**, au moyen d'un système directeur automatique, le véhicule suiveur (18) est agencé pour être guidé suivant les bandes (16 et 17) travaillées par les premier et deuxième broyeurs (11 et 12).

7. Dispositif de récolte (1) selon une des revendications 1 à 6, **caractérisé en ce que** la machine de récolte est conformée en moissonneuse-batteuse automotrice.

8. Dispositif de récolte (1) selon une des revendications 1 à 6, **caractérisé en ce que** la machine de récolte (2) est conformée en ensileuse automotrice.

9. Dispositif de récolte (1) selon la revendication 8, **caractérisé en ce que** le dispositif de récolte (1) comporte un véhicule de collecte (20) qui est déplaçable parallèlement à l'ensileuse automotrice (2) et qui est agencé pour être guidé au moyen d'un équipement directeur automatique suivant des bandes (21 et 22) générées par le premier et le deuxième broyeur (11 et 12) pendant une opération de récolte antérieure.
